# EUROPÄISCHE PATENTSCHRIFT

(11) **EP 0 445 506 B1**
(45) Veröffentlichungstag und Bekanntmachung des Hinweises auf die Patenterteilung: **15.03.1995**
(21) Anmeldenummer: 91100482.8
(22) Anmeldetag: 17.01.1991
(51) Int. Cl.: G01N 29/00, G21C 17/06

(54) **Einrichtung zum Ultraschallprüfen einer in einem Bauteil eingesetzten Kopfschraube**
Apparatus for ultrasonic testing of a screw's head placed in a component
Dispositif de contrôle ultrasonore de la tête d'une vis placée dans un élément de construction

(30) Priorität: 22.01.1990 DE 4005545
(43) Veröffentlichungstag der Anmeldung: 11.09.1991
(73) Patentinhaber: ABB Reaktor GmbH, D-68167 Mannheim (DE)
(72) Erfinder: Russ, Jakob, W-6725 Römerberg 1 (DE); D'Annucci, Filippo, Dr., W-6800 Mannheim 31 (DE); Gustafsson, Jan Olof, S-175 40 Järfälla (SE); Orrgard, Staffan, S-182 33 Danderyd (SE)
(74) Vertreter: Rupprecht, Klaus, Dipl.-Ing.

(56) Entgegenhaltungen:
- DE-A- 3 504 522
- US-A- 3 977 236

## Beschreibung

Die Erfindung betrifft eine Ultraschallprüfeinrichtung für eine in einem Bauteil eingesetzte Kopfschraube mit einer mindestens einen Ultraschallwandler tragenden Ultraschallsonde.

Eine derartige Einrichtung ist aus der DE-PS 35 04 522 bekannt. Dort wird die Ultraschallsonde planetenartig um die Schraubenachse verdreht und die einzelnen Segmente des Schraubenkopfes werden nacheinander beschallt. Dazu sind sich senkrecht zur Schraubenachse ausbreitende Einrichtungsteile erforderlich, die einen Einsatz der Einrichtung nur bei entsprechenden Platzverhältnissen erlauben. Ferner ergibt sich wegen der schrittweisen Prüfung eine lange Prüfzeit. Trotz der zur Positionierung der Sonde relativ zu den einzelnen Segmenten erforderlichen aufwendigen Bauweise der Einrichtung ergeben sich insbesondere dann unpräzise Prüfergebnisse, wenn beispielsweise auf Grund einer von der Sollachse abweichenden Einschraubachse die Schraubenachse und die Sondenachse nicht mehr parallel zueinander verlaufen.

Aus der US-A-3,977,236 ist eine auf einem Bauteil abstellbare Ultraschallprüfeinrichtung zur Prüfung einer in diesem Bauteil angeordneten Kopfschraube bekannt. Dazu ist ein schwenkbarer Ultraschallprüfkopfhalter an einem verdrehbaren Teller der Einrichtung befestigt. Der schwenkbare Halter erlaubt die Einstellung verschiedener Einstellwinkel, während der verdrehbare Teller zur Änderung der koaxialen Position des Prüfkopfes zur Schraube dient. Eine Art Gummipuffer ist zwischen der Bauteiloberfläche und dem Prüfkopfhalter angeordnet.

Es stellt sich die Aufgabe, eine Einrichtung der eingangsgenannten Art anzugeben, die unabhängig von der Lage der Einschraubachse präzise Prüfergebnisse bei reduzierter Prüfdauer liefert.

Gelöst wird diese Aufgabe erfindungsgemäß durch die Merkmale des Anspruchs 1.

Die Achse des die Ultraschallwandler tragenden Zentrierstückes und die Schraubenachse bilden über ihre gedachten Verlängerung eine Gerade. Unabhängig von dem Verlauf der Schraubenachse zu der Achse des Sondenträgers erfolgt eine präzise Beschallung in der geplanten Ebene. Die koaxial zur Schraubenachse erfolgte Verdrehung findet nur solange statt, bis im Benehmen mit der Linearbewegung der Sonde in Achsrichtung der Schraube die zentrierende Verbindung zwischen dem Adapter und dem Schraubenkopf erfolgt ist. Jetzt wird unmittelbar die Prüfung durchgeführt. Ein Verdrehen zum Zwecke der Prüfung weiterer Segmente ist nicht erforderlich, da der Sonde für jedes zu prüfende Segment ein Ultraschallwandler zugeordnet ist.

Weist der Schraubenkopf ein mit dem Bauteil verbundenes Sicherungselement auf, so ist der Adapter mit einem Quer schlitz versehen, der das Sicherungselement übergreift.

Nach einer bevorzugten Ausgestaltung besteht die Ultraschallsonde aus einen das Zentrierstück aufnehmenden, in Reihe zu diesem angeordneten Pendelhalter, den sich ebenfalls in Reihe ein Hubzylinder und ein Drehantrieb anschließen.

Durch die daraus resultierende schlanke Bauweise der Ultraschallsonde kann sie auch an Engstellen eingesetzt werden.

Zwischen dem Antrieb und dem Hubzylinder ist eine Rutschkupplung zwischengeschaltet, die nach den erfolgten Einrasten des Adapters in die Kontur des Schraubenkopfes automatisch den Verdrehvorgang unterbricht.

Zur Erzielung der pendelnden Aufhängung ist vorgesehen, daß der Pendelhalter einen dem Schraubenkopf abgewandten Wulst übergreift und daß im Hohlraum des Pendelhalters eine Druckfeder angeordnet ist, die zwischen dem Zentrierstück und dem Pendelhalter erstreckt ist.

Anhand eines Ausführungsbeispieles und der Figuren 1 bis 3 wird eine erfindungsgemäße Einrichtung beschrieben.

Dabei zeigt die
- Fig. 1: einen Teilbereich eines Bauteiles mit einer Kopfschraube und einer Sonde, teilweise im Schnitt,
- Fig. 2: einen Teil der Figur 1 in einem größeren Maßstab und
- Fig. 3: eine Ansicht entlang der Linie III-III der Figur 2.

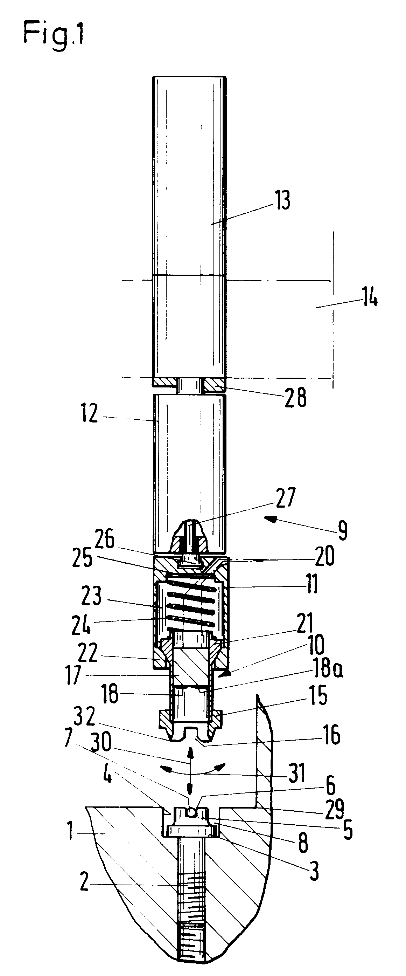

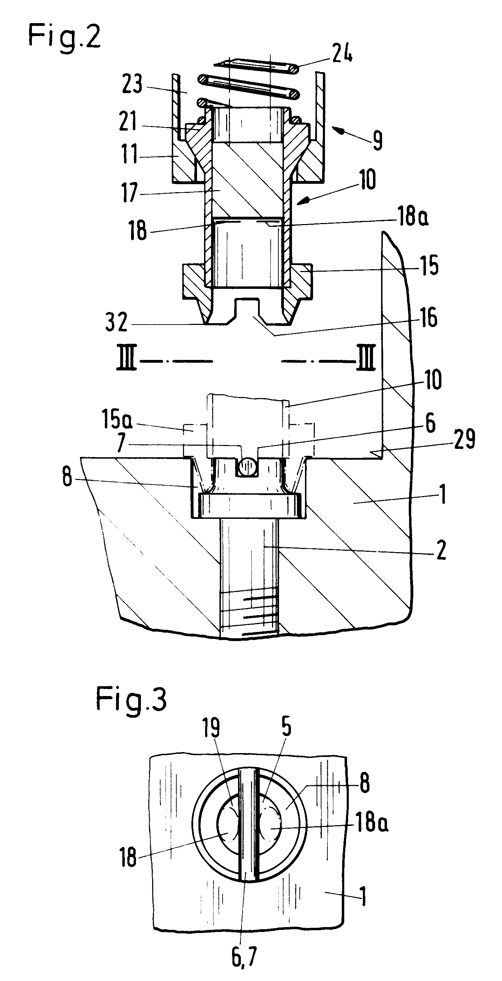

Die Figur 1 zeigt den Teilbereich eines Bauteiles 1, in den eine Kopfschraube 2 bis zur Anlage ihrer Schulter 3 an den Boden einer Senkung 4 eingeschraubt ist. Der Schraubenkopf 5 schließt mit der Oberkante der Senkung 4 ab. Durch einen stirnseitigen Schlitz 6 der Kopfschraube 2 erstreckt sich ein Sicherungsstift 7, der mit seinen freien Enden eine Verbindung mit dem Bauteil 1 eingeht (Figur 3). Der Sicherungsstift 7 übergreift somit den zwischen dem Schraubenkopf 5 und der Senkung 4 gebildeten Ringraum 8.

Zur Prüfung der Kopfschraube 2 auf Anrisse wird eine Ultraschallsonde 9 eingesetzt, die aus einem Zentrierstück 10, einem Pendelhalter 11, einem pneumatischen Hubzylinder 12 und einem Drehantrieb 13 besteht. Die Ultraschallsonde 9 ist an einem nicht weiter dargestellten Schlitten 14 befestigt, mit desen Hilfe sie in die Nähe der zu prüfenden Kopfschraube 2, wie in der Figur 1 dargestellt, herangeführt wird.

An dem der Kopfschraube 2 zugewandten Ende weist das Zentrierstück 10 einen ringförmigen Adapter 15 auf, der als Teil des Zentrierstückes 10 mit diesem starr verbunden ist. Der dem Schraubenkopf 5 zugewandte Teil des Adapters 15 entspricht mit seiner Innenfläche der Kontur des Schraubenkopfes und ist hinsichtlich seiner Außenfläche so ausgebildet, daß er in den Ringraum 8 einbringbar ist. Ferner ist der Adapter 15 mit einem Querschlitz 16 versehen, der den in den Ringraum 8 ragenden Teil des Sicherungsstiftes 7 (Figur 3) paßgenau zu übergreifen vermag. An seinem dem Adapter abgewandten Ende ist in das Zentrierstück 10 ein stopfenförmig ausgebildeter Träger 17 eingelassen, der an seinem der Kopfschraube 2 zugewandten Ende zwei diametral gegenüberliegend angeordnete Ultraschallwandler 18, 18a aufnimmt. Sie sind in ihrem Querschnitt der Form des jeweils zu beschallenden Segmentes 19 des Schraubenkopfes 5 weitestgehend angepaßt (Figur 3). Erreger- und Meßleitungen 20 der Ultraschallwandler führen nach außerhalb der Ultraschallsonde 9 und sind in ihrem weiteren Verlauf nicht dargestellt. An seinem dem Adapter 15 abgewandten Ende ist das Zentrierstück 10 mit einen ballig ausgebildeten Wulst 21 versehen, der von einem Rücksprung 22 des Pendelhalters 11 übergriffen ist. Im Bereich seiner Kontaktfläche mit dem Wulst 21 ist der Rücksprung 22 in gleicher Weise ballig ausgebildet. Ein Hohlraum 23 des Pendelhalters 11 nimmt eine Druckfeder 24 auf, die an der Wulstrückseite des Zentrierstückes 10 und an der den hinteren Abschluß des Pendelhalters 11 bildenden Wand 25 zur Anlage kommt und den ständigen, federnden Kontakt zwischen Wulst 21 und Rücksprung 22 sicherstellt. In die der Druckfeder 24 abgewandte Wand 25 des Pendelhalters 11 ist lösbar ein Ende 26 einer Kolbenstange 27 des Hubzylinders 12 eingelassen. Mit dem Hubzylinder 12 ist in Reihe der Drehantrieb 13 unter Zwischenschaltung einer Rutschkupplung 28 verbunden. Durch die schlanke Bauweise der Sonde 9 ist sie auch an Engstellen, wie durch die Ecken 29 des Bauteiles 1 angedeutet, einsetzbar.

Sobald die Ultraschallsonde 9 mit dem Schlitten 14 in die in Figur 1 gezeigte Position gebracht worden ist, erfolgt die lineare Heranführung des Zentrierstückes 10 (Pfeilrichtung 30) über den Pendelhalter 11 durch den Hubzylinder 12 bis zum Kontakt mit dem Schraubenkopf 5. Alsdann erfolgt über den Drehantrieb 13 eine zusätzliche Drehbewegung in Pfeilrichtung 31 bis das Zentrierstück 10 mit seinem Adapter 15 in die in Figur 2 strichpunktiert angedeutete Position 15a gelangt ist. Die Rutschkupplung 28 unterbricht dabei die Drehbewegung, sobald der Eingriff des Querschlitzes 16 in den Sicherungsstift 7 erfolgt ist. Die lineare Bewegung des Zentrierstückes 10 über den Hubzylinder 12 wird nun noch bis zur Anlage der Stirnfläche 32 des Adapters 15 an die abgesetzte Fläche des Schraubenkopfes 5 fortgeführt, wobei die pendelnde Aufhängung die gewünschte Zentrierung ermöglicht. Nach Erreichen dieser exakten Prüfposition erfolgt die Ultraschallprüfung.

## Patentansprüche

1. Ultraschallprüfeinrichtung für eine in einem Bauteil (1) eingesetzte Kopfschraube (2), mit einer mindestens einen Ultraschallwandler (18, 18a) tragenden Ultraschallsonde (9), **dadurch gekennzeichnet**, daß die Ultraschallwandler (18, 18a) in einem pendelnd aufgehängten Zentrierstück (10) der Sonde (9) angeordnet sind, daß am freien Ende des Zentrierstückes (10), das im Verwendungsfall der Stirnseite des Schraubenkopfs zugewandt ist, ein Adapter (15) vorgesehen ist und daß die Ultraschallsonde (9) um ihre Achse und in Achsrichtung bewegbar ist, wobei die pendelnde Aufhängung dann, wenn sich bei Bewegung der Sonde in Achsrichtung die Stirnfläche (32) des Adapters an den Schraubenkopf (5) anlegt, so verkippt, daß die Achse des Zentrierstücks und die Schraubenachse unabhängig von der Lage der Schraubenachse in Übereinstimmung gebracht werden.

2. Einrichtung nach Anspruch 1, dadurch gekennzeichnet, daß das freie Ende des Adapters (15) mit einem Querschlitz (16) versehen ist.

3. Einrichtung nach Anspruch 1 oder 2, dadurch gekennzeichnet, daß die Sonde (9) aus einem das Zentrierstück (10) aufnehmenden, in Reihe zu diesem angeordneten Pendelhalter (11) besteht, dem sich ebenfalls in Reihe ein Hubzylinder (12) und ein Drehantrieb (13) anschließen.

4. Einrichtung nach Anspruch 3, dadurch gekennzeichnet, daß zwischen dem Antrieb (13) und dem Hubzylinder (12) eine Rutschkupplung (28) zwischengeschaltet ist, die nach dem erfolgten Einrasten des Adapters (15) in die Kontur des Schraubenkopfes (5) automatisch den Verdrehvorgang unterbricht.

5. Einrichtung nach einem der Ansprüche 1 bis 4, dadurch gekennzeichnet, daß der Pendelhalter (11) einen dem Schraubenkopf (5) abgewandten Wulst (21) des Zentrierstückes (10) übergreift und daß in einem Hohlraum (23) des Pendelhalters (11) eine Druckfeder(24) angeordnet ist, die zwischen dem Zentrierstück (10) und dem Pendelhalter (11) erstreckt ist.

## Claims

1. Ultrasonic testing device for a head screw (2) inserted into a component (1), comprising an ultrasonic probe (9) bearing at least one ultrasonic transducer (18, 18a), characterized in that the ultrasonic transducers (18, 18a) are arranged in a cradle-mounted centring piece (10) of the probe (9), in that an adaptor (15) is provided at the free end of the centring piece (10), which when in use faces the end face of the screw head, and in that the ultrasonic probe (9) can be moved about its axis and in the axial direction, it being the case that whenever, upon movement of the probe in the axial direction, the end face (32) of the adaptor bears against the screw head (5) the cradle mounting tilts in such a way that the axis of the centring piece and the screw axis are brought into agreement independently of the position of the screw axis.

2. Device according to Claim 1, characterized in that the free end of the adaptor (15) is provided with a transverse slot (16).

3. Device according to Claim 1 or 2, characterized in that the probe (9) consists of a floating holder (11), which accommodates the centring piece (10) and is arranged in series therewith, and to which a lift cylinder (12) and a rotary drive (13) are joined, likewise in series.

4. Device according to Claim 3, characterized in that connected between the drive (13) and the lift cylinder (12) is a slip clutch (28), which automatically interrupts the process of rotation after the adaptor (15) has engaged with the contour of the screw head (5).

5. Device according to one of Claims 1 to 4, characterized in that the floating holder (11) overreaches a collar (21) averted from the screw head (5), and in that a compression spring (24), which is extended between the centring piece (10) and the floating holder (11), is arranged in a cavity (23) of the floating holder (11).

## Revendications

1. Dispositif de contrôle par ultrasons pour une vis (2) à tête implantée dans un élément de construction (1), comportant au moins un palpeur (9) à ultrasons avec au moins un transducteur à ultrasons (18, 18a), caractérisé par le fait que le transducteur à ultrasons (18, 18a) est disposé dans une pièce de centrage (10) montée oscillante du palpeur (9), par le fait qu'il est prévu à l'extrémité libre de la pièce de centrage (10) un adaptateur (15) qui, lors de l'utilisation, est tourné vers la face frontale de la tête de la vis et par le fait que le palpeur à ultrasons (9) peut être déplacé autour de son axe et dans la direction axiale, le montage oscillant, lorsque au cours du déplacement du palpeur dans la direction axiale la face frontale (32) de l'adaptateur (15) vient en contact avec la tête (5) de la vis pivotant de manière telle que l'axe de la pièce de centrage et l'axe de la vis coïncident, quelle que la position de la vis.

2. Dispositif selon la revendication 1, caractérisé par le fait que l'extrémité libre de l'adaptateur (15) est pourvue d'une fente (16) transversale.

3. Dispositif selon la revendication 1 ou la revendication 2, caractérisé par le fait que le palpeur (9) est constitué d'un porte élément oscillant (11) qui reçoit la pièce de centrage (10), est monté à la suite de celle-ci et à la suite duquel sont montés un vérin (12) et un mécanisme (13) d'entraînement en rotation.

4. Dispositif selon la revendication 3, caractérisé par le fait qu'un accouplement à friction (28) est placé entre le mécanisme (13) d'entraînement en rotation et le vérin (12), lequel accouplement interrompt automatiquement l'entraînement en rotation dès que l'adaptateur (15) est en prise avec le contour extérieur de la tête (5) de la vis.

5. Dispositif selon l'une des revendications 1 à 4, caractérisé par le fait que le porte élément oscillant (11) entoure un bourrelet (21) de la pièce de centrage (10) éloigné de la tête (5) de la vis et par le fait qu'un ressort de compression (24) est disposé dans une cavité (23) du porte élément oscillant (11) et s'étend entre la pièce de centrage (10) et ledit porte élément oscillant (11).
